# EUROPÄISCHE PATENTSCHRIFT

(11) **EP 0 961 807 B1**
(45) Veröffentlichungstag und Bekanntmachung des Hinweises auf die Patenterteilung: **28.03.2001**
(21) Anmeldenummer: 98903997.9
(22) Anmeldetag: 07.01.1998
(51) Int. Cl.: C08J 9/00, C08J 9/10, E04B 1/62

(54) **VERFAHREN UND SCHÄUMBARE MASSE ZUR AUSSCHÄUMUNG ODER SCHAUMBESCHICHTUNG VON BAUTEILEN**
METHOD AND FOAMABLE MATERIAL FOR FOAMING OR FOAM COATING COMPONENTS
PROCEDE ET MATIERE EXPANSIBLE S'UTILISANT POUR LE MOUSSAGE OU LE REVETEMENT PAR MOUSSAGE D'ELEMENTS CONSTITUTIFS

(30) Priorität: 22.02.1997 DE 19707136
(43) Veröffentlichungstag der Anmeldung: 08.12.1999
(73) Patentinhaber: Möller Plast GmbH, 33649 Bielefeld (DE)
(72) Erfinder: JANDALI, M., Zouheir, D-33649 Bielefeld (DE)
(74) Vertreter: Schirmer, Siegfried, Dipl.-Ing.
(86) Internationale Anmeldenummer: DE9800017
(87) Internationale Veröffentlichungsnummer: WO9837130

(56) Entgegenhaltungen:
- EP-A- 0 526 872
- WO-A-91/12391
- DE-C- 4 415 586
- US-A- 4 391 922

## Beschreibung

Die Erfindung betrifft ein Verfahren zur Ausschäumung oder Schaumbeschichtung von Bauteilen, bei dem eine in die Hohlräume von doppel- oder mehrwandigen Bauteilen eingebrachte oder zwischen einer Bauteilfläche und einem Dekormaterial befindliche Masse zur Bildung einer Schaumfüllung aufgeschäumt wird.

An Bauteile mit hoher Steifigkeit werden in zunehmendem Maße Anforderungen an eine gleichzeitige Gewichstreduzierung gestellt. Das Ausschäumen der Hohlräume mehrwandiger Bauteile erfolgt üblicherweise durch die thermische Zersetzung eines Treibmittelsystems, welches im schaumbildenden Polymerwerkstoff durch Compoundierung verankert ist oder durch Einfüllen eines unter Überdruck stehenden und in dem Hohlraum expandierenden Schaums, der mit der Luftfeuchtigkeit reagiert und dabei aushärtet.

Aufgrund der bereits während des Eintragens in die Hohlräume stattfindenden Aufschäumung können in dem auszuschäumenden Raum leicht nicht ausgeschäumte Bereiche verbleiben, die eine erhebliche Qualitätsminderung darstellen. Bei länggestreckten oder in komplizierten Strukturen ausgebildeten Hohlräume oder großen Querschnitten ist es außerdem erforderlich, den Schaum an mehreren Stellen über eine Vielzahl Bohrungen in das Bauteil einzubringen, wobei dennoch eine gleichmäßige Ausfüllung mit Schaum nicht gewährleistet und dieses Verfahren zudem sehr aufwendig ist.

Es ist weiterhin bekannt, die optische Wirkung von Bauteilen durch Beschichten mit Dekormaterialien, wie Folien, Leder oder Textilien, zu erhöhen und gleichzeitig eine verbesserte Haptik dadurch zu erzielen, daß zwischen der Bauteiloberfläche und dem Dekormaterial eine Schaumstoffschicht vorgesehen ist, die in Stärke und Festigkeit variabel sein soll. Das Aufbringen eines derartigen Schaumrückens, das bekanntermaßen im Verbund mit einem Dekormaterial erfolgt, ist jedoch insofern mit Schwierigkeiten verbunden, als als der Schaum in stark verformten Bereichen kollabieren oder der Schaum-Dekormaterial-Verbund bei härteren Schäumen mit größerer Wandstärke nicht faltenfrei auf das Bauteil aufgetragen werden kann.

Bei einem bekannten Verfahren zur Herstellung von Formteilen mit einer optisch und haptisch vorteilhaften hinterschäumten Dekorschicht wird das Dekormaterial an seiner Rückseite zunächst mit einem unverschäumten Stoff beschichtet, und nach dem Auflegen des Dekormaterials wird die bis dahin unverschäumte oder vorverschäumte Rückseitenschicht durch die Eigenwärme des zu beschichtenden Bauteils und/oder zusätzlich aufgebrachte Wärme aufgeschäumt. Durch ungleichmäßige Wärmeübertragung oder ein Temperaturgefälle an dem jeweiligen Bauteil ist eine gleichmäßige Stärke und Weichheit der zwischen dem Bauteil und der Dekorschicht befindlichen Schaumstoffschicht nicht immer sichergestellt.

In der WO 91/12 391 ist ein Verfahren zum Ausschäumen von Bauteilen bekannt, die insbesondere im Wohnungsbau verwendet werden. Bei dem bekannten Verfahren werden Mikrowellen lediglich dazu benutzt, in einem Vorratsbehälter die Vorläuferstoffe der schäumbaren Masse bzw. das Bauteil zu erwärmen. Das Aufschäumen selbst wird durch die Wärme der Vorläüferstoffe bzw. des Bauteils unterstützt. Die Schaumbildung ist temperaturempfindlich, weshalb eine Temperaturregelung der Ausgangsstoffe notwendig ist, um reproduzierbare Ergebnisse zu erhalten. Das erfolgt in einem Heiztank, wo die flüssigen Ausgangsstoffe mit Mikrowellen bestrahlt werden. Darüber hinaus kann auch ein Bauteil in einem Ofen mit Mikrowellen erwärmt werden. Wenn zwischen dem Erwärmen des Bauteils und dem Einbringen der schäumbaren Masse eine Verzögerung auftritt und das Bauteil dabei abkühlt, wird es erneut in dem Ofen aufgeheizt. Hieraus folgt eindeutig, daß die schäumbare Masse nicht mittels Mikrowellen innerhalb des Bauteils erwärmt und aufgeschäumt wird.

Der Erfindung liegt daher die Aufgabe zugrunde, ein Verfahren und eine aufschäumbare Masse zur Ausschäumung oder Schaumbeschichtung von Bauteilen anzugeben, das auch bei großen oder kompliziert ausgebildeten Hohlräumen und/oder großflächigen Dekorbeschichtungen eine gleichmäßige und vollständige Ausschäumung der Hohlräume sowie eine Schaum-Dekor-Verbundbeschichtung in über die gesamte Beschichtungsfläche gleichbleibender Stärke und Festigkeit gewährleistet.

Erfindungsgemäß wird die Aufgabe mit einem Verfahren gelöst, bei dem eine polar eingestellte schäumbare Masse in oder auf das Bauteil aufgebracht und anschließend durch Mikrowellenenergie durch Dipolwechselwirkung erwärmt und dabei aufgeschäumt wird, wobei die Polarität der schäumbaren Masse durch einen in feiner Verteilung beigemischten leitenden Stoff eingestellt wird.

Durch die Einstellung einer Polarität der schäumbaren Masse durch einen in feiner Verteilung beigemischten leitenden Stoff werden bei Anlegen eines Mikrowellenfeldes in der schäumbaren Masse dielektrische Verluste bewirkt, so daß dem Mikrowellenfeld Energie entzogen und unmittelbar in der aufschäumbaren Masse in Wärme umgewandelt wird und damit zu deren Aufschäumen führt. Da sich die Wärmeerzeugung im wesentlichen auf die aufschäumbare Masse selbst beschränkt oder durch deren spezifische Zusammensetzung in dieser erzeugt wird, kann eine schnelle und gleichmäßige Erwärmung aller Bereiche der Masse, d. h. auch bei großen oder langgestreckten Volumina, erzielt werden, so daß die Hohlräume in doppel- oder mehrwandigen Bauteilen vollständig und gleichmäßig ausgefüllt werden bzw. bei Beschichtungen eine einheitliche Stärke und Weichheit des aufgeschäumten Schaumstoffs erreicht wird.

Nach einem weiteren Merkmal der Erfindung wird die Gleichmäßigkeit der Aufschäumung weiterhin dadurch verbessert, daß durch Reflexion der Mikrowellen in einem Ultrahochfrequenz-Heizkanal auf der Basis eines Resonatorkammersystems (Hohlraumresonator) eine Verteilung der Mikrowellen und damit eine bessere Wärmeverteilung in der aufschäumbaren Masse bewirkt wird.

In vorteilhafter Ausgestaltung der Erfindung wird zur Einstellung der Festigkeit der aufgeschäumten Masse das Massevolumen im unverschäumten Zustand variiert. Dadurch kann die Steifigkeit eines ausgeschäumten doppelwandigen Bauteils oder die Haptik bei einer Oberflächenbeschichtung beeinflußt werden.

Die erfindungsgemäße aufschäumbare Masse, die im wesentlichen durch ein Ethylenvinylacetat-Copolymer gebildet ist, weist einen Vinylacetatanteil in einer Größenordnung von 15 bis 30 % auf, um über die Größe dieses Anteils die gleichmäßige Weichheit bzw. Härte der Schaumqualität einzustellen.

Nach einem weiteren Merkmal der Erfindung ist die aufschäumbare Masse wie folgt zusammengesetzt:

| | |
|---|---|
| 100 | Teilen Ethylenvinylacetat-Co-Polymer mit einem VA-Gehalt von 0 bis 30 % |
| 0,01 bis 5,0 | Teilen Di-Phenoxy-di-sulfo-hydrazid |
| 0,01 bis 5,0 | Teilen Bis-(tert.-Butylperoxiisopropyl)-Benzol |
| 0,01 bis 10,0 | Teilen Azodicarbonamid |
| 0,01 bis 5,0 | Teilen Zinktoluolsulfonat |
| 0,01 bis 1,5 | Teilen Bis-(3,3-bis(4'-hydroxy-3'-tert. butylphenyl)-butansäure)-glykolester |
| 0,01 bis 10,0 | Teilen Trimethylolpropantrimethacrylat (TRIM) |
| 0,00 bis 10,0 | Teilen Talkum |
| 0,01 bis 5,0 | Teilen N-N-Bis(2-Hydroxyethyl)Alkyl Amin |
| 0,00 bis 5,0 | Teilen Glyzerinmonostearat |
| 0,00 bis 25,0 | Teilen leitender Ruß |

Weitere Merkmale und vorteilhafte Ausgestaltungen der Erfindung sind in den Unteransprüchen angegeben.

Ausführungsbeispiele der Erfindung werden nachfolgend näher beschrieben.

Eine im wesentlichen aus einem Ethylenvinylacetat-Co-Polymer bestehende Polymermasse mit einem Vinylacetatanteil in der Größenordnung von 15 bis 30 % sowie leitendem Ruß und weiteren Komponenten in den o. a. Mengenbereichen wird in Form eines Granulats über die Öffnungen eines doppelwandigen Bauteils aus Blech in dessen Hohlraum eingebracht und darin verteilt. Anschließend wird das so vorbereitete Bauteil in einem Ultrahochfrequenz-Heizkanal mit einem in einem Hohlraumresonator befindlichen Mikrowellenfeld aufgeheizt. Aufgrund der Reflexionswirkung werden die Mikrowellen gleichmäßig über den gesamten Querschnitt und die Länge des Ultrahochfrequenz-Heizkanals und damit auch über die schäumbare Masse verteilt, wobei in der aufschäumbaren Polymermasse durch den mit dieser vermischten Ruß starke dielektrische Verluste mit der Folge einer intensiven Erwärmung in allen Teilen der Masse und deren damit verbundenem gleichmäßigen Aufschäumen auftreten. Da die ein kleines Volumen einnehmende unaufgeschäumte Masse zuvor in alle Hohlraumbereiche des doppelwandigen Bauteils gelangen konnte und die Wärmewirkung im wesentlichen auf die Polymermasse beschränkt ist und die Mikrowellen aufgrund der vielfachen Reflexion zudem alle Teile der eingefüllten Masse gleichermaßen gut erreichen können, ist eine vollständige und gleichmäßige Ausschäumung auch großer oder kompilziert geformter Hohlräume gewährleistet.

Zur Verbesserung der Haptik eines zur optischen Gestaltung mit einem Dekormaterial zur beschichtenden Oberflächenbereichs eines Bauteils wird ein Zuschnitt eines aus einem textilen Gewebe bestehenden Dekormaterials auf der Rückseite mit einer Polymermasse auf Venylacetatbasis und mit leitendem Ruß sowie weiteren Bestandteilen entsprechend der o. a. Rezeptur versehen. Die Oberfläche des Bauteils wird mit dem so präparierten Dekormaterial derart kaschiert, daß sich die Polymermasse zwischen dem Gewebe und der Bauteiloberfläche befindet. Anschließend wird das Bauteil in einen Ultrahochfrequenz-Heizkanal verbracht und die Polymermasse aufgrund der in allen Flächenbereichen wirksamen Mikrowellen gleichmäßig erwärmt und in einer der aufgetragenen Schichtdicke entsprechenden Stärke aufgeschäumt. Die aufgeschäumte Schicht geht gleichzeitig eine feste Verbindung mit der Oberfläche des Bauteils und dem textilen Gewebe ein.

## Patentansprüche

1. Verfahren zur Ausschäumung oder Schaumbeschichtung von Bauteilen, bei dem eine in die Hohlräume von doppeloder mehrwandigen Bauteilen eingebrachte oder zwischen einer Bauteilfläche und einem Dekormaterial befindliche Masse zur Bildung einer Schaumfüllung aufgeschäumt wird, dadurch gekennzeichnet, daß eine polar eingestellte schäumbare Masse zunächst vollständig in oder auf das Bauteil ein- bzw. aufgebracht wird und anschließend durch Mikrowellenenergie erwärmt und dabei aufgeschäumt wird und daß die Polarität der schäumbaren Masse durch einen in feiner Verteilung beigemischten leitenden Stoff eingestellt wird.

2. Verfahren nach Anspruch 1, dadurch gekennzeichnet, daß der polarisierende Stoff ein Ruß und/oder ein ethoxyliertes Amin und/oder ein Fettsäuremono, Fettsäuredi oder Fettsäurepolyglycolester ist.

3. Verfahren nach Anspruch 1 oder 2, dadurch gekennzeichnet, daß die Aufschäumung zur weiteren Vergleichmäßigung der Energieverteilung über die Länge und den Querschnitt der schäumbaren Masse mittels in einem Resonatorkammersystem reflektierter Mikrowellen vorgenommen wird.

4. Verfahren nach einem der Ansprüche 1 bis 3, dadurch gekennzeichnet, daß die Mikrowellenerwärmung in Verbindung mit einem Heißluftkanal durchgeführt wird.

5. Verfahren nach einem der Ansprüche 1 bis 4, dadurch gekennzeichnet, daß zur Einstellung der Festigkeit des Schaums das Massevolumen der unverschäumten Masse variiert wird.

6. Verfahren nach einem der Ansprüche 1 bis 5, dadurch gekennzeichnet, daß die gleichmäßige Weichheit des Schaums durch den jeweiligen VA-Gehalt (Vinylacetatgehalt) in den jeweiligen bzw. verwendeten EVA-CoPo eingestellt wird.

7. Verfahren nach einem der Ansprüche 1 bis 6, dadurch gekennzeichnet, daß die schäumbare Masse zum teilweisen oder vollständigen Beschichten der Außenfläche eines Bauteils auf die Rückseite eines flächigen Dekormaterials aufgetragen und in dieser Form durch Hinterblasen, Hinterpressen, Tiefziehen und ähnliche Verfahren auf die Bauteiloberfläche aufgebracht und anschließend aufgeschäumt wird.

8. Verfahren nach Anspruch 7, dadurch gekennzeichnet, daß die Stärke der aufgeschäumten Schicht durch die Schichtdicke der unverschäumten Masse eingestellt wird.

9. Schäumbare Masse zur Durchführung des Verfahrens nach Anspruch 1, gekennzeichnet durch ein Gemisch aus
| | |
|---|---|
| 100 | Teilen Ethylenvinylacetat-Co-Polymer mit einem VA-Gehalt von 0 bis 30 % |
| 0,01 bis 5.0 | Teilen Di-Phenoxy-di-sulfo-hydrazid |
| 0,01 bis 5,0 | Teilen Bis-(tert.-Butylperoxiisopropyl)-Benzol |
| 0,01 bis 10,0 | Teilen Azodicarbonamid |
| 0,01 bis 5,0 | Teilen Zinktoluolsulfonat |
| 0,01 bis 1,5 | Teilen Bis-(3,3-bis(4'-hydroxy-3'-tert.butylphenyl)-butansäure)-glykolester |
| 0,01 bis 10,0 | Teilen Trimethylolpropantrimethacrylat (TRIM) |
| 0,00 bis 10,0 | Teilen Talkum |
| 0,01 bis 5,0 | Teilen N-N-Bis(2-Hydroxyethyl)Alkyl Amin |
| 0,00 bis 5,0 | Teilen Glyzerinmonostearat |
| 0,00 bis 25,0 | Teilen leitender Ruß. |

10. Schäumbare Masse nach Anspruch 9, dadurch gekennzeichnet, daß der Vinylacetatanteil in dem Ethylenacetat-Co-Polymer zwischen 15 und 30 % liegt.

11. Schäumbare Masse nach Anspruch 9 oder 10, dadurch gekennzeichnet, daß sie in ihrer Ausgangsform als Pulver, Granulat, Faser oder Folie oder als flüssiger oder pastöser Stoff vorliegt.

## Claims

1. Method of foam-filling or foam-coating components, in which a mass introduced into the cavities of double-walled or multi-walled components or disposed between a component surface and a decorative material is foamed for formation of a foam filling, characterised in that a polar-adjusted foamable mass is initially introduced fully into or applied fully onto the component and subsequently heated by microwave energy and thus foamed and that the polarity of the foamable mass is adjusted by a conductive substance admixed in fine distribution.

2. Method according to claim 1, characterised in that the polarising substance is a black and/or an ethoxylised amine and/or a fatty acid monoglycolester, a fully acid diglycolester or fatty acid polyglycolester.

3. Method according to claim 1 or 2, characterised in that for further homogenisation of the energy distribution over the length and cross-section the foaming of the foamable mass is undertaken by means of microwaves reflected in a resonator chamber system.

4. Method according to one of claims 1 to 3, characterised in that the microwave energy heating is undertaken in conjunction with a hot air channel.

5. Method according to one of claims 1 to 4, characterised in that the mass volume of the unfoamed mass is varied for adjustment of the solidity of the foam.

6. Method according to one of claims 1 to 5, characterised in that the uniform softness of the foam is set by the respective VA content (vinylacetate content) in the respective or used EVA copolymer.

7. Method according to one of claims 1 to 6, characterised in that for partial or complete coating of the outer surface of a component the foamable mass is applied to the rear side of an areal decorative material and applied to the component surface in this form by rearward blowing, rearward pressing, deep-drawing and similar methods and subsequently foamed.

8. Method according to claim 7, characterised in that the thickness of the foamed layer is set by the layer thickness of the unfoamed mass.

9. Foamable mass for carrying out the method according to claim 1, characterised by a mixture of
| | |
|---|---|
| 100 | parts of ethylene vinylacetate copolymer with a VA content of 0 to 30%, |
| 0.01 to 5.0 | parts of diphenoxy-disulfohydrazide, |
| 0.01 to 5.0 | parts of bis(tert-butylperoxyisopropyl)-benzol, |
| 0.01 to 10.0 | parts of azodicarbonamide, |
| 0.01 to 5.0 | parts of zinc toluolsulfonate, |
| 0.01 to 1.5 | parts of bis(3,3-bis(4'-hydroxy-3'-tert-butylphenyl)-butanic acid)-glycolester, |
| 0.01 to 10.0 | parts of trimethylolpropanotrimethacrylate (TRIM), |
| 0.00 to 10.0 | parts of talcum, |
| 0.01 to 5.0 | parts of N-N-bis(2-hydroxyethyl) alkyl amine, |
| 0.00 to 5.0 | parts of glycerin monostearate and |
| 0.00 to 25.0 | parts of conductive black. |

10. Foamable mass according to claim 9, characterised in that the vinylacetate proportion in the ethylene acetate copolymer lies between 15 and 30%.

11. Foamable mass according to claim 9 or 10, characterised in that it is present in its starting form as powder, granulate, fibre or foil or as a liquid or pasty substance.

## Revendications

1. Procédé d'expansion ou de revêtement de pièces avec de la mousse, selon lequel on expanse une masse introduite dans les cavités de pièces à double paroi ou à plusieurs parois, ou se trouvant entre une surface de pièce et une matière décorative, pour former un remplissage de mousse,
caractérisé en ce qu'
- on applique une masse expansible introduite de manière polaire, tout d'abord complètement dans ou sur la pièce,
- on chauffe ensuite avec de l'énergie fournie par des micro-ondes, et
- on expanse et enfin on règle la polarité de la masse expansée par une matière conductrice, mélangée à une autre distribution.

2. Procédé selon la revendication 1,
caractérisé en ce que
la matière polarisante est du noir de carbone et/ou une amine éthoxylée et/ou un mono, di ou polyglycolester d'acide gras.

3. Procédé selon la revendication 1 ou 2,
caractérisé en ce que
l'expansion est effectuée pour régulariser de manière plus poussée la répartition de l'énergie sur toute la longueur et toute la section de la masse expansible, à l'aide de micro-ondes réfléchies sur le système de paroi du résonateur.

4. Procédé selon l'une quelconque des revendications 1 à 3,
caractérisé en ce que
le chauffage par micro-ondes est fait en liaison avec un canal d'air chaud.

5. Procédé selon l'une quelconque des revendications 1 à 4,
caractérisé en ce que
pour régler la solidité de la mousse, on modifie le volume massique de la mousse non expansée.

6. Procédé selon l'une quelconque des revendications 1 à 5,
caractérisé en ce qu'
on règle la souplesse régulière de la mousse par la teneur respective en vinylacétate dans les copolymères éthylène-vinylacétale respectivement utlisés.

7. Procédé selon l'une quelconque des revendications 1 à 6,
caractérisé en ce qu'
on applique la mousse expansible en partie ou en totalité sur des zones de la surface extérieure d'une pièce, sur le côté arrière d'une matière décorative en surface, et cette forme est appliquée puis expansée par soufflage vers l'arrière, pressage par l'arrière, emboutissage profond ou procédé supplémentaire appliqué sur la base de la surface de la pièce.

8. Procédé selon la revendication 7,
caractérisé en ce que
l'épaisseur de la couche expansée est réglée par l'épaisseur de la couche de la matière non expansée.

9. Masse expansible pour la mise en oeuvre du procédé selon la revendication 1,
caractérisée par un mélange comprenant :
| | |
|---|---|
| 100 | parties de copolymère éthylène-vinylacétate avec une teneur en vinylacétate comprise entre 0 et 30 % |
| 0,01 à 5,0 | parties de di-phénoxy-di-sulfo-hydrazine |
| 0,01 à 5,0 | parties de bis-(tert-butylperoxyisopropyl)-benzène |
| 0,01 à 10,0 | parties d'azodicarbonamide |
| 0,01 à 5,0 | parties de toluolsulfonate de zinc |
| 0,01 à 1,5 | partie de bis-(3,3-bis(4'-hydroxy-3'-tert.butylphényl) -acide butyrique) -glycolester |
| 0,01 à 10,0 | parties de trihydroxyméthylpropanetriméthacrylate (TRIM) |
| 0,00 à 10,0 | parties de talc |
| 0,01 à 5,0 | parties de N-N-bis(2-hydroxyéthyl)alkylamine |
| 0,00 à 5,0 | parties de monostéarate de glycérine |
| 0,00 à 25,0 | parties de noir de fumée. |

10. Masse expansible selon la revendication 9,
caractérisée en ce que
la teneur en vinylacétate dans le copolymère d'éthylacétate, est comprise entre 15 et 30 %.

11. Masse expansible selon la revendication 9 ou 10,
caractérisée en ce qu'
elle est présente, dans sa forme de base, comme poudre, granulés, fibres ou feuilles, ou encore comme matière liquide ou pâteuse.
